# EUROPÄISCHE PATENTSCHRIFT

(11) **EP 4 165 327 B1**
(45) Veröffentlichungstag und Bekanntmachung des Hinweises auf die Patenterteilung: **06.03.2024**
(21) Anmeldenummer: 21727410.9
(22) Anmeldetag: 17.05.2021
(51) Int. Cl.: F16H 63/34, F16D 3/50

(54) **PARKSPERRENEINRICHTUNG FÜR EIN FAHRZEUG UND VERFAHREN ZUM HERSTELLEN EINER PARKSPERRENEINRICHTUNG FÜR EIN FAHRZEUG**
PARK LOCK DEVICE FOR A VEHICLE AND METHOD FOR PRODUCING A PARK LOCK DEVICE FOR A VEHICLE
DISPOSITIF DE VERROUILLAGE DE STATIONNEMENT POUR UN VÉHICULE ET PROCÉDÉ DE FABRICATION D'UN DISPOSITIF DE VERROUILLAGE DE STATIONNEMENT POUR UN VÉHICULE

(30) Priorität: 15.06.2020 DE 102020207340
(43) Veröffentlichungstag der Anmeldung: 19.04.2023
(73) Patentinhaber: Robert Bosch GmbH, 70442 Stuttgart (DE)
(72) Erfinder: FISCHER, Arne, 74376 Gemmrigheim (DE); SCHWARTZ, Daniel, 71701 Schwieberdingen (DE); FEIGL, Markus, 71706 Markgroeningen (DE)
(86) Internationale Anmeldenummer: PCT/EP2021/062959
(87) Internationale Veröffentlichungsnummer: WO 2021/254705

(56) Entgegenhaltungen:
- DE-A1- 2 701 183
- DE-A1- 2 701 205
- DE-A1- 10 143 386
- DE-A1-102012 214 415
- DE-A1-102015 013 285
- US-B1- 6 419 068

## Beschreibung

Die vorliegende Erfindung betrifft eine Parksperreneinrichtung für ein Fahrzeug und ein Verfahren zum Herstellen einer Parksperreneinrichtung für ein Fahrzeug.

### Stand der Technik

Übliche Parksperren können bei einer elektrischen Antriebsvorrichtung, etwa bei einer elektrischen Achse, eingesetzt werden und vorteilhaft eine Sperrwirkung für eine Fahr- oder Rollbewegung des Fahrzeugs erzeugen und dieses vorteilhaft daran hindern unabsichtlich wegzurollen, oder zumindest die Wahrscheinlichkeit dafür zu verringern.

Ein Parksperrenrad kann mit einer Antriebswelle fest verbunden sein und läuft auf dieser mit sobald sich die elektrische Maschine einer E-Achse dreht. Bei Auslösung der Parksperre geht vom Aktuator eine Drehbewegung aus, die über einen Schaltmechanismus die Sperrklinke in das Parksperrenrad drückt. Durch das Einrücken der Klinke in das Parksperrenrad kann über den Formschluss die Antriebswelle ruckartig gestoppt werden. Dies bedeutet, dass der E-Motor der E-Achse in Millisekunden zum Stoppen kommt. Dabei tritt ein sehr großes Drehmoment auf. Es ist dabei wünschenswert, das ruckartige Stoppen und das damit verbundene große Drehmoment abzumildern, und zu dämpfen.

Das Parksperrenrad kann mit einer Antriebswelle fest verbunden sein und läuft auf dieser mit sobald sich der E-Motor einer E-Achse dreht.

Beim Auslösen der Parksperre kann dabei die komplette E-Achse in Sekundenbruchteilen stoppen und ein enormes Drehmoment wirkt schlagartig auf die Antriebswelle, Getriebewelle und deren Lager, das Parksperrenrad, die Klinke sowie das Gehäuse. Daher müssen diese Bauteile sowie die Kugellager und das Gehäuse sehr massiv ausgeführt werden. Massivere Bauteile bedeuten höhere Kosten sowie eine schwerere und größere E-Achse.

Die WO 2019/020252 A1 beschreibt eine Einrichtung zur Blockierung eines Getriebes mit mindestens einer Welle und mindestens einem auf der Welle koaxial angeordneten Sperrenrad.

Die DE 101 43 386 A1 und US 6 419 068 B1 offenbarer jeweils eine Parksperreneinrichtung für ein Fahrzeug.

Das Dokument DE 10 2015 0013285 A1, auf welchem die zweiteilige Anspruchsfassung basiert, offenbart eine Parksperreinrichtung für ein Fahrzeug mit einem Klinkenrad und einem Federelement als Dämpfungseinrichtung.

### Offenbarung der Erfindung

Die vorliegende Erfindung schafft eine Parksperreneinrichtung für ein Fahrzeug nach Anspruch 1 und ein Verfahren zum Herstellen einer Parksperreneinrichtung für ein Fahrzeug nach Anspruch 8.

Bevorzugte Weiterbildungen sind Gegenstand der Unteransprüche.

### Vorteile der Erfindung

Die der vorliegenden Erfindung zugrunde liegende Idee besteht darin, eine Parksperreneinrichtung für ein Fahrzeug sowie ein Verfahren zum Herstellen einer Parksperreneinrichtung für ein Fahrzeug anzugeben, wobei eine Übertragung des Sperrmoments auf die Komponenten der Parksperreneinrichtung abgedämpft werden kann und eine kostengünstigere, leichtere und kompaktere Parksperreneinrichtung sowie eine elektrische Antriebsvorrichtung erzielt werden kann, wobei die Parksperreneinrichtung in einer solchen elektrische Antriebsvorrichtung, etwa in einer elektrischen Antriebsachse, eingebaut werden kann.

Gemäß der vorliegenden Erfindung wird die obige Aufgabe durch eine Parksperreinrichtung nach Anspruch 1 gelöst.

Vorteilhafte Ausgestaltungen der Erfindung sind in den abhängigen Ansprüchen definiert.

Die Parksperreneinrichtung kann in einer elektrischen Antriebsachse eingesetzt werden um ein Elektroauto daran zu hindern, unabsichtlich wegzurollen, oder zumindest die Gefahr dazu verringern.

Das Flügelrad kann mit der Antriebswelle drehfest verbunden sein. Die Halteelemente können bestimmte Bereiche des Klinkenrades mit dem Flügelrad fix verbinden. Das Klinkenrad und das Flügelrad können axial, als entlang der Antriebswelle, vorteilhaft an einer gleichen axialen Position angeordnet sein. Dabei kann eine Richtung lateral zu dem Klinkenrad und zum Flügelrad der Richtung entlang der Antriebsachse(welle) entsprechen, die sich senkrecht auf das Flügelrad, etwa in beide Richtungen weg von diesem, erstrecken kann.

In einer Ruhelage des Flügelrades kann dieses eine konstante Position relativ zum Klinkenrad aufweisen. Dabei kann ein Flügelbereich in einem azimuthalen Zwischenbereich zwischen den benachbarten Anschlägen derart positioniert sein, dass zwischen dem Flügelbereich und dem jeweils benachbarten Anschlag eine der Dämpfungseinrichtungen angeordnet sein kann, vorzugsweise jeweils eine gleiche Dämpfungseinrichtung mit einem gleich großen azimuthalen Zwischenbereich (oder alternativ dazu auch verschiedene Dämpfungseinrichtungen und verschieden große Zwischenbereiche). Im offenen Zustand, also wenn keine Sperrwirkung vorhanden ist, kann sich das Klinkenrad konzentrisch und mit gleicher Drehgeschwindigkeit mit dem Flügelrad mitdrehen. Dies kann durch ein Anschiebend des Klinkenrades durch den Flügelbereich und über die Dämpfungseinrichtung erzielt werden, also ein Drehmoment nahezu ungedämpft an das Klinkenrad weitergegeben werden.

Bei Auslösen der Sperrwirkung, also beim Fixieren und Einrasten der Sperrklinke und beim Blockieren des Klinkenrades, kann sich das Flügelrad bis zur nächsten Dämpfungseinrichtung bewegen oder liegt in Ruhelage auch schon an dieser an, an diese anschlagen und diese zwischen dem Flügelbereich und dem Anschlag einklemmen und bei weiterer Drehung verformen, vorzugsweise elastisch. Dadurch kann das Drehmoment der Sperrwirkung und die plötzliche Blockierwirkung der Drehbewegung des Klinkenrades auf das Flügelrad abgedämpft werden.

Durch die Verwendung eines solchen drehweichen Parksperrenrades mit Dämpfungseinrichtungen kann das enorme Drehmoment gedämpft werden und die Bauteile werden dadurch weniger belastet.

Wenn die Bauteile weniger Drehmoment aushalten müssen, brauchen diese somit weniger massiv hergestellt zu werden. Dadurch ergeben sich die Vorteile, wonach die Bauteile kostengünstiger hergestellt werden können und das Gehäuse, die Wellen, das Lager, die elektrische Achse in kompakterer und günstigerer Bauweise hergestellt werden können.

Die ganze Baugruppe kann mit Schrauben und Muttern zusammengehalten werden, etwa zwischen den Seitendeckeln und dem Klinkenrad.

Die Halteelemente können das Klinkenrad axial gegenüber dem Flügelrad fixieren und aber eine Rotation um das Flügelrad mit der Antriebswelle als Drehachse zulassen, etwa wenn die Anschläge auf dem radialen Außenbereich des Flügelrades bewegbar aufliegen.

Gemäß einer bevorzugten Ausführungsform der Parksperreneinrichtung umfasst die weitere Dämpfungseinrichtung ein Gummielement, welches eine Zylinderform oder eine Kugelform aufweist.

Das Gummielement kann in Größe und Form an den Zwischenbereich angepasst sein und sich vorteilhaft elastisch verformen wenn der Flügelbereich auf den Anschlag drückt.

Die Gummielemente können dabei in Form und (Shore) Härte variabel gestaltet werden, etwa als Kugel oder als Zylinder. Wichtig bei der Formgebung der Gummidämpfer ist, dass diese nur leicht das Flügel- und das Gehäuserad berühren. Beim Zylinder ist es eine Linienberührung und bei der Kugel eine Punktberührung. Erst bei zunehmendem Zusammendrücken der Gummielemente wird die Berührungsfläche vergrößert. Dadurch wird die Dämpfung bei zunehmendem Zusammendrücken erhöht. Im Fahrbetrieb halten die Dämpfungseinrichtungen, hierbei die Gummielemente, das Flügelrad vorteilhaft mittig sodass sich zwei gleich große Zwischenbereiche ergeben können in denen die Gummielemente eingelegt sein können. Dies ist wichtig, da die Funktion beim Vorwärts- sowie Rückwärtsfahren gewährleistet sein kann. Wird die Parksperre ausgelöst, schnappt die Sperrklinke ins Klinkenrad. Dieses beginnt sich schlagartig gegen das noch stehende Flügelrad zu drehen. Dabei drückt das Klinkenrad die Gummielemente gegen das Flügelrad. Die Gummidämpfer werden elastisch zusammengedrückt, was eine dämpfende Wirkung zur Folge hat. Durch dieses Dämpfungsprinzip wird das Drehmoment nicht mehr komplett an das Flügelrad und die Antriebswelle abgegeben weil die Gummielemente einen Teil absorbieren. Dies hat zur Folge, dass Antriebswelle sowie Getriebewellen sowie deren Lager und Gehäuse nicht mehr so massiv ausgelegt werden müssen. Sobald die Klinke wieder öffnet drücken die sich ausdehnenden Gummielemente das Flügelrad wieder in Ausgangsstellung zurück.

Gemäß der vorliegenden Erfindung umfasst die Dämpfungseinrichtung ein Federelement.

Das Federelement kann aus einem Metall gefertigt sein, am Anschlag fixiert werden und sich zumindest in einen der benachbarten Zwischenbereiche erstrecken. Es können im Umlauf um das Flügelrad somit mehrere Federelemente oder auch andere Dämpfungseinrichtungen in Kombination angeordnet werden.

Gemäß der vorliegenden Erfindung umfasst das Federelement eine Halterung, von welcher sich eine Feder oder zwei Federn wegerstrecken und die Halterung auf dem Anschlag aufsetzbar ist und sich die eine Feder in einen der azimuthalen Zwischenbereiche oder jede Feder in einen anderen azimuthalen Zwischenbereich erstreckt, und wobei die Halterung die Halteelemente umfasst.

Durch die Halterung kann das Federelement vorteilhaft einfach und schnell an dem Anschlag befestigt werden.

Das Parksperrenrad kann vier Federelemente umfassen. Diese Federelemente können aus Federstahl im Blechstanz Biegeverfahren hergestellt werden. Dabei kann die Halterung eine Arretier-Zunge und zwei Metalllaschen umfassen, wobei an einem Anschlag die Arretier-Zunge auf einer Seite des Anschlags aufsetzbar ist und die Metalllaschen können dann um den Anschlag umgebogen werden und den Anschlag dann an der gegenüberliegenden Seite des Anschlags umgreifen. Das Federelement kann dabei in Form und Wandstärke ein Stück weit variabel gestaltet werden. Zwei der vier Federelemente können jeweils über den gegenüberliegenden Anschlag des Klinkenrades geschoben werden und die Metalllaschen werden plastisch um den Anschlag herum verpresst, sodass die zwei Federelemente am Klinkenrad befestigt sein können. Das Flügelrad wird dann in die Mitte des Klinkenrades gelegt. Die Baugruppe wird dann um 180C° gedreht und die zwei verbleibenden Federelemente werden montiert und mit dem Klinkenrad form- und kraftschlüssig über die Metalllaschen zusammengepresst. Durch die Arretier-Zungen kann sich das Klinkenrad zum Flügelrad nach Abschluss der Montage nicht mehr axial verschieben, dies kann sich radial bereichsweise über den Anschlag und über das Flügelrad, dessen radialen Innenbereich, erstrecken. Die Arretier-Zunge kann somit das Halteelement darstellen. Im Fahrbetrieb können die Federn das Flügelrad mittig halten, sodass sich in Ruhelage zwei gleich große Hohlräume als azimuthale Zwischenbereiche ergeben können. Durch zwei solche Zwischenbereiche mit Federelementen kann diese Funktion beim Vorwärts- sowie Rückwärtsfahren gewährleistet sein. Bei einsetzender Sperrwirkung drückt das Klinkenrad die Federn gegen das Flügelrad. Die Federn werden elastisch zusammengedrückt, was eine dämpfende Wirkung zur Folge hat. Durch dieses Dämpfungsprinzip wird das Drehmoment nicht mehr komplett an das Flügelrad und die Antriebswelle abgegeben weil die Federn einen Teil absorbieren. Sobald die Klinke wieder öffnet drücken die sich ausdehnenden Federn das Flügelrad wieder in die Ausgangsstellung zurück.

Gemäß einer bevorzugten Ausführungsform der Parksperreneinrichtung umfasst die weitere Dämpfungseinrichtung ein Öl, welches in den azimuthalen Zwischenbereich einfüllbar ist.

Das Öl kann ein hydraulisches Ö sein, welches eine hohe Inkompressibilität aufweisen kann..

Gemäß einer bevorzugten Ausführungsform der Parksperreneinrichtung ist zwischen der radialen Innenseite des Klinkenrades und einer radialen Oberseite des Flügelbereichs ein Zwischenraum vorhanden, durch welchen das Öl von einem ersten azimuthalen Zwischenbereich in einen benachbarten zweiten azimuthalen Zwischenbereich drückbar ist, wobei der erste azimuthale Zwischenbereich und der zweite azimuthale Zwischenbereich an gegenüberliegenden Seiten des Flügelbereichs anliegen.

So kann beim Einsetzen der Sperrwirkung eine Dämpfung zwischen dem Flügelbereich und dem benachbarten Anschlag erzielt werden, wenn das Öl aus diesem herausgedrückt wird und durch den Zwischenraum in den anderen zum Flügelbereich benachbarten Zwischenbereich gedrückt wird.

Gemäß einer bevorzugten Ausführungsform der Parksperreneinrichtung füllt das Öl den Freiraum im Inneren des Gehäuses vollständig.

Durch die vollständige Füllung kann der Druckaufbau beim Einsetzten der Sperrwirkung im Freiraum verbessert werden und die inkompressible Wirkung effektiv genutzt werden.

Der komplette Hohlraum zwischen dem Klinkenrad und dem Flügelrad kann mit Hydrauliköl befüllt sein. Es können weiterhin Zwischenfedern in den Freiraum eingesetzt sein, zumindest eine, die sich in die an einem Flügelbereich benachbarten Zwischenbereiche erstrecken kann. Durch die Zwischenfeder kann das Flügelrad in Ruhelage mittig zwischen zwei benachbarten Anschlägen gehalten werden, sodass sich zwei gleich große mit Hydrauliköl gefüllte Zwischenbereiche ergeben können. Diese beiden Zwischenbereiche können eine Dämpfung beim Sperren für das Vorwärts- sowie Rückwärtsfahren gewährleisten. Wird die Parksperre ausgelöst schnappt die Klinke ins Klinkenrad. Dieses beginnt sich schlagartig gegen das noch stehende Flügelrad zu drehen. Dabei kann das Hydrauliköl durch die Engstelle (Zwischenraum) gepresst werden, ähnlich einem Stoßdämpfer. Die Zwischenfeder kann gleichzeitig elastisch gestaucht werden, durch die Bewegung des Anschlags. Durch dieses Dämpfungsprinzip wird das Drehmoment nicht mehr komplett an das Flügelrad und die Antriebswelle abgegeben. Sobald die Klinke wieder öffnet, kann über die Zwischenfeder(n) das Flügelrad wieder mittig positioniert und somit in Ausgangsstellung gebracht werden.

Gemäß einer bevorzugten Ausführungsform der Parksperreneinrichtung umfasst diese Seitendeckel, wobei jeder Seitendeckel zwei Dichtringe, die in den Seitendeckel eingelegt sind und eine Abdichtung des Freiraums im Inneren des Gehäuses zwischen dem jeweiligen Seitendeckel und dem Klinkenrad darstellen.

Durch die Dichtringe kann das Öl an einem Austreten aus dem Gehäuse gehindert werden und ein Endringen von Flüssigkeiten von außen verhindert werden.

Gemäß einer bevorzugten Ausführungsform der Parksperreneinrichtung umfasst diese zumindest zwei Dämpfungseinrichtungen, wobei eine erste Dämpfungseinrichtung zwischen dem Flügelbereich und einem ersten Anschlag in einem ersten azimuthalen Zwischenbereich angeordnet ist und eine zweite Dämpfungseinrichtung zwischen dem Flügelbereich und einem zweiten Anschlag in einem zweiten azimuthalen Zwischenbereich angeordnet ist, wobei der erste azimuthale Zwischenbereich und der zweite azimuthale Zwischenbereich an gegenüberliegenden Seiten des Flügelbereichs anliegen.

Durch zwei Dämpfungseinrichtungen um den Flügelbereich herum, kann die Dämpfungswirkung vorteilhaft für beide Drehrichtungen (vorwärts und rückwärts) erzeugt werden.

Gemäß der vorliegenden Erfindung wird die obige Aufgabe durch ein Verfahren zum Herstellen einer Parksperreinrichtung für ein Fahrzeug nach Anspruch 8 gelöst.

Die Parksperreneinrichtung kann sich auch durch die in Verbindung mit dem Verfahren genannten Merkmale und dessen Vorteile auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: eine schematische Darstellung einer Parksperreneinrichtung in einer Ruhelage mit einer Dämpfungseinrichtung gemäß einem Ausführungsbeispiel der vorliegenden Erfindung;
- Fig. 2: eine schematische Darstellung eines Klinkenrades und eines Flügelrades in einer Ruhelage mit einer Dämpfungseinrichtung gemäß einem Ausführungsbeispiel der vorliegenden Erfindung;
- Fig. 3: eine schematische Darstellung einer Parksperreneinrichtung in einer Sperrlage mit einer Dämpfungseinrichtung gemäß einem Ausführungsbeispiel der vorliegenden Erfindung;
- Fig. 4a - c: jeweils eine schematische Darstellung einer Dämpfungseinrichtung gemäß einem Ausführungsbeispiel der vorliegenden Erfindung;
- Fig. 5a, b: eine schematische Darstellung einer Parksperreneinrichtung in einer Ruhelage und in einer Sperrlage mit einer alternativen Dämpfungseinrichtung gemäß einem weiteren Ausführungsbeispiel, welches nicht unter den Schutzumfang des unabhängigen Anspruchs 1 fällt;
- Fig.6a, b, c: eine schematische Darstellung eines Gehäuses einer Parksperreneinrichtung gemäß einem weiteren Ausführungsbeispiel der vorliegenden Erfindung;
- Fig. 7a, b: eine schematische Darstellung einer Parksperreneinrichtung in einer Ruhelage und in einer Sperrlage mit einer alternativen Dämpfungseinrichtung gemäß einem weiteren Ausführungsbeispiel, welches nicht unter den Schutzumfang des unabhängigen Anspruchs 1 fällt;
- Fig. 8: eine schematische Darstellung einer Parksperreneinrichtung in einer Ruhelage mit einer alternativen Dämpfungseinrichtung gemäß einem weiteren Ausführungsbeispiel, welches nicht unter den Schutzbereich des unabhängigen Anspruchs 1 fällt;
- Fig. 9: eine Blockdarstellung von Verfahrensschritten des Verfahrens zum Herstellen einer Parksperreneinrichtung gemäß einem Ausführungsbeispiel der vorliegenden Erfindung.

In den Figuren bezeichnen gleiche Bezugszeichen gleiche bzw. funktionsgleiche Elemente.

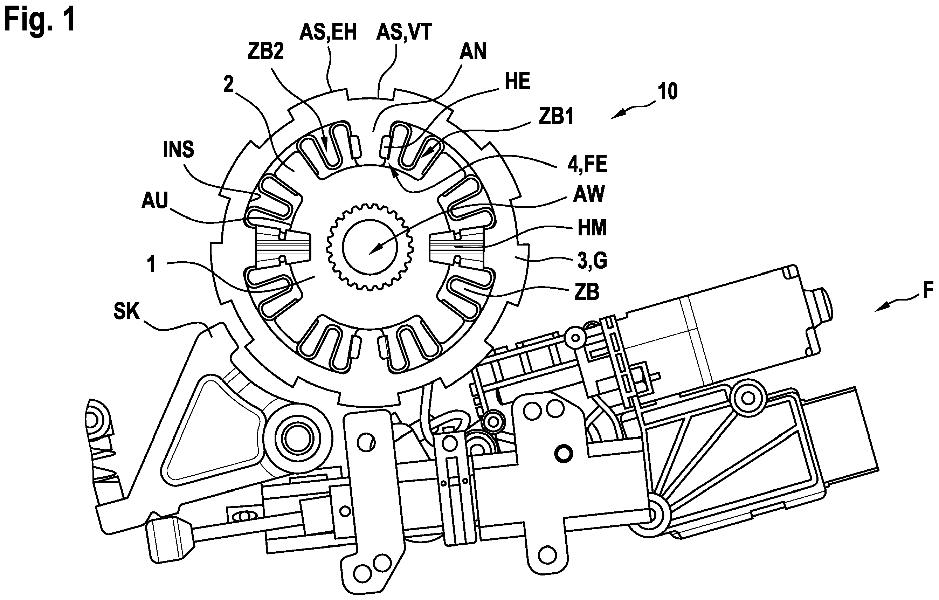

Fig. 1 zeigt eine schematische Darstellung einer Parksperreneinrichtung in einer Ruhelage mit einer Dämpfungseinrichtung gemäß einem Ausführungsbeispiel der vorliegenden Erfindung.

Die Parksperreneinrichtung 10 für ein Fahrzeug F umfasst ein Flügelrad 1, welches mit einer Antriebswelle AW des Fahrzeugs F verbindbar ist, wobei das Flügelrad 1 einen radialen Außenumfang AU und zumindest einen Flügelbereich 2 umfasst, welcher sich von dem radialen Außenumfang AU des Flügelrades 1 radial nach außen erstreckt; ein Gehäuse G, welches ein Klinkenrad 3 und Halteelemente HM umfasst, wobei die Halteelemente HM das Klinkenrad 3 jeweils von einer lateralen Seite drehbar auf der Antriebswelle AW fixieren, wobei das Klinkenrad 3 einen Freiraum im Inneren des Gehäuses G umgibt, wobei das Klinkenrad 3 eine radiale Außenseite AS mit Erhebungen EH und Vertiefungen VT dazwischen umfasst und eine radiale Innenseite INS mit Anschlägen AN umfasst, wobei sich die Anschläge AN radial nach innen in den Freiraum erstrecken, und wobei das Flügelrad 1 konzentrisch bezüglich der Antriebswelle AW in das Klinkenrad 3 und im Freiraum eingefasst ist, derart dass sich der Flügelbereich 2 zwischen zwei, einander azimuthal benachbarte, Anschläge AN in einen azimuthalen Zwischenbereich ZB zwischen die benachbarten Anschläge AN erstreckt, wobei das Klinkenrad 3 über die Halteelemente HM axial bezüglich dem Flügelrad 1 fixierbar ist; zumindest eine Dämpfungseinrichtung 4, welche zwischen dem Flügelbereich 2 und einem der Anschläge AN im azimuthalen Zwischenbereich ZB angeordnet ist; und eine Sperrklinke SK, welche in eine der Vertiefungen VT einrastbar ist, etwa durch einen Aktuator, und durch welche eine Drehbewegung des Klinkenrades 3 sperrbar ist, wobei bei einem gesperrten Klinkenrad 3 eine Übertragung eines Drehmoments von dem Anschlag AN auf den Flügelbereich 2 durch die Dämpfungseinrichtung 4 zumindest teilweise absorbierbar ist.

Die Dämpfungseinrichtung 4 umfasst gemäß der vorliegenden Erfindung ein Federelement bzw. kann mehrere Federelemente FE umfassen, wobei ein solches Federelement FE eine Halterung HE umfasst, von welcher sich zwei Federn wegerstrecken und die Halterung HE auf dem Anschlag AN aufsetzbar ist und sich die eine Feder in einen ersten azimuthalen Zwischenbereich ZB1 und die zweite Feder in einen zweiten azimuthalen Zwischenbereich ZB2 erstreckt, und wobei die Halterung HE die Halteelemente HM umfasst.

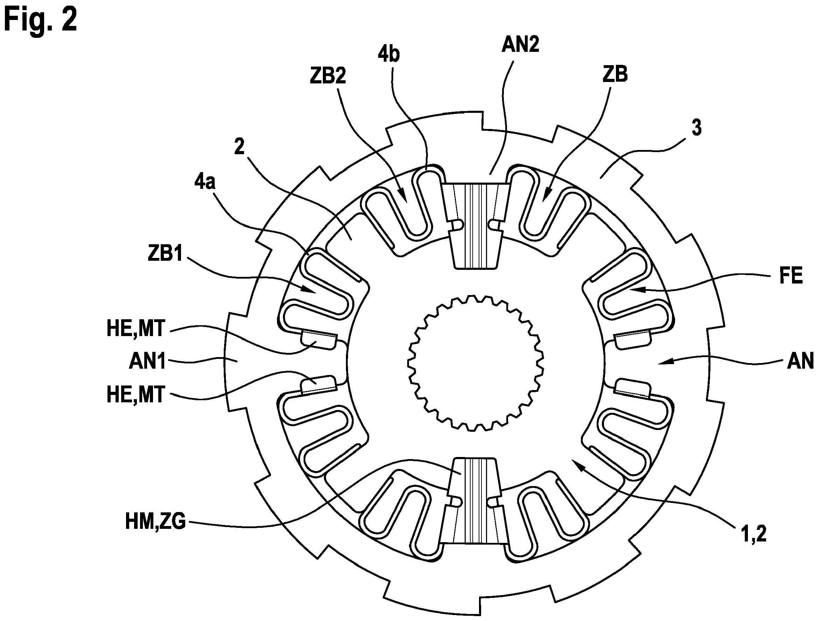

Fig. 2 zeigt eine schematische Darstellung eines Klinkenrades und eines Flügelrades in einer Ruhelage mit einer Dämpfungseinrichtung gemäß einem Ausführungsbeispiel der vorliegenden Erfindung.

Bei der Ruhelage kann das Flügelrad mit der Antriebsachse(welle) AW mitlaufen und das Klinkenrad 3 mitdrehen.

An einem Anschlag können zwei Dämpfungseinrichtungen 4 als Federelement angeordnet sein, wobei eine erste Dämpfungseinrichtung 4a zwischen dem Flügelbereich 2 und einem ersten Anschlag AN1 in einem ersten azimuthalen Zwischenbereich ZB1 angeordnet ist und eine zweite Dämpfungseinrichtung 4b zwischen dem Flügelbereich 2 und einem zweiten Anschlag AN2 in einem zweiten azimuthalen Zwischenbereich ZB2 angeordnet ist, wobei der erste azimuthale Zwischenbereich ZB1 und der zweite azimuthale Zwischenbereich ZB2 an gegenüberliegenden Seiten desselben Flügelbereichs 2 anliegen können. In Ruhelage können der erste azimuthale Zwischenbereich ZB1 und der zweite azimuthale Zwischenbereich ZB2 gleich groß sein und die Federelemente unverpresst.

Diese Federelemente FE können aus Federstahl im Blechstanz Biegeverfahren hergestellt werden. Dabei kann die Halterung HE eine Arretier-Zunge ZG und zwei Metalllaschen MT umfassen, wobei an einem Anschlag die Arretier-Zunge ZG auf einer Seite des Anschlags AN aufsetzbar ist und die Metalllaschen MT können dann um den Anschlag umgebogen werden und den Anschlag dann an der gegenüberliegenden Seite des Anschlag umgreifen. Das Federelement FE kann dabei in Form und Wandstärke ein Stück weit variabel gestaltet werden. Zwei der vier Federelemente können jeweils über den gegenüberliegenden Anschlag AN des Klinkenrades 3 geschoben werden und die Metalllaschen MT werden plastisch um den Anschlag herum verpresst, sodass die zwei Federelemente am Klinkenrad befestigt sein können. Das Flügelrad wird dann in die Mitte des Klinkenrades gelegt. Die Baugruppe wird dann um 180C° gedreht und die zwei verbleibenden Federelemente werden montiert und mit dem Klinkenrad form- und kraftschlüssig über die Metalllaschen zusammengepresst.

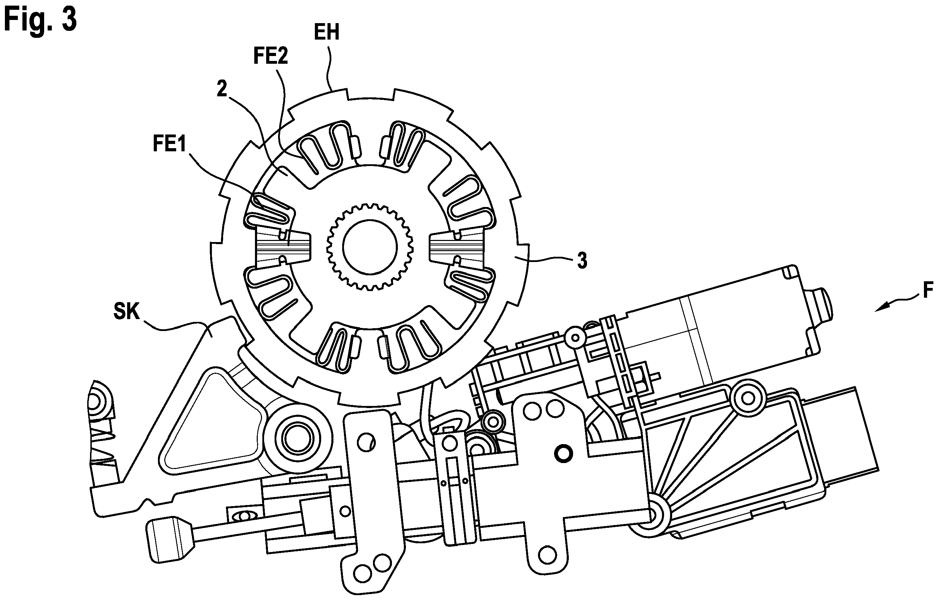

Fig. 3 zeigt eine schematische Darstellung einer Parksperreneinrichtung in einer Sperrlage mit einer Dämpfungseinrichtung gemäß einem Ausführungsbeispiel der vorliegenden Erfindung.

In der Sperrlage rastet sie Sperrklinke SK zwischen zwei Erhebungen EH des Klinkenrades 3 ein, durch einen Aktuator ausgelöst. Das Flügelrad mit dem Flügelbereich 2 kann sich danach noch etwas weiter drehen, wobei der Flügelbereich das erste Federelement FE (die erste Feder) zusammendrücken kann und die zweite Feder FE2 entlasten kann. In der Fig. 3 ist dies symbolisch dargestellt, indem sich der Flügelbereich dem in Drehrichtung nächstgelegenen Anschlag nähert und die dazwischenliegende Feder FE1 zusammenpresst.

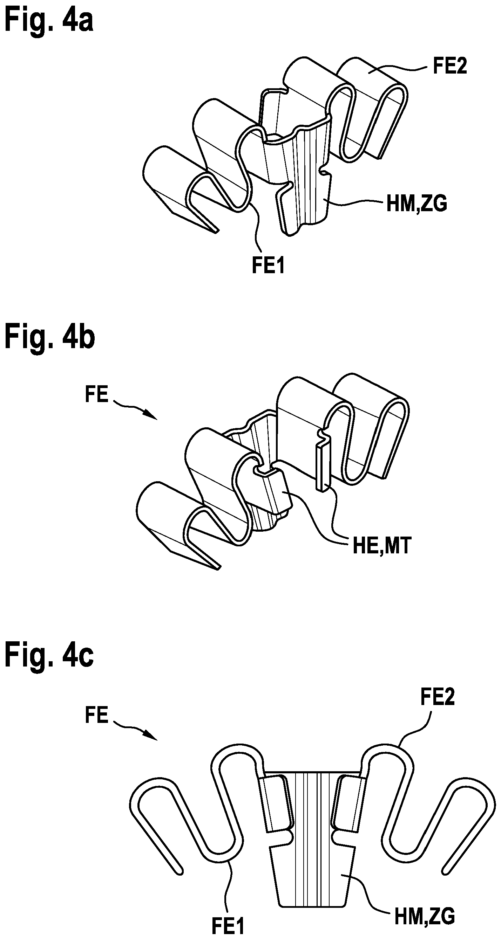

Fig. 4a - c zeigen jeweils eine schematische Darstellung einer Dämpfungseinrichtung gemäß einem Ausführungsbeispiel der vorliegenden Erfindung.

Die Figuren 4a, 4b und 4c zeigen dabei unterschiedliche perspektivische Ansichten der Federelemente FE.

Die Federelemente FE können je zwei Federn FE1 und FE2 umfassen, die mit der Halterung HE einstückig ausgeformt sein können und sich mit Umbiegebereichen jeweils von der Halterung HE wegerstrecken können, wenn verbaut dann in den Zwischenbereich hinein. Die beiden Federn F1 und FE2 können aus Federstahl im Blechstanz Biegeverfahren hergestellt werden. Dabei kann die Halterung HE eine Arretier-Zunge ZG (Fig. 4c) und zwei Metalllaschen MT umfassen (Fig.4a und Fig. 4b), wobei an einem Anschlag die Arretier-Zunge ZG auf einer Seite des Anschlags aufsetzbar ist und die Metalllaschen MT können dann um den Anschlag umgebogen werden und den Anschlag dann an der gegenüberliegenden Seite des Anschlag umgreifen. Das Federelement FE kann dabei in Form und Wandstärke ein Stück weit variabel gestaltet werden. Zwei der vier Federelemente können jeweils über den gegenüberliegenden Anschlag des Klinkenrades geschoben werden und die Metalllaschen MT werden plastisch um den Anschlag herum verpresst, sodass die zwei Federelemente am Klinkenrad befestigt sein können.

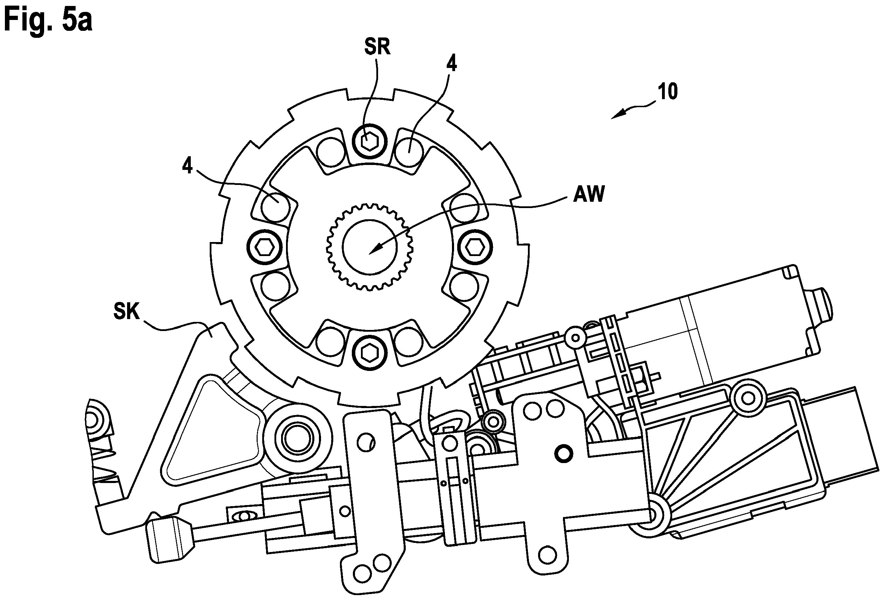

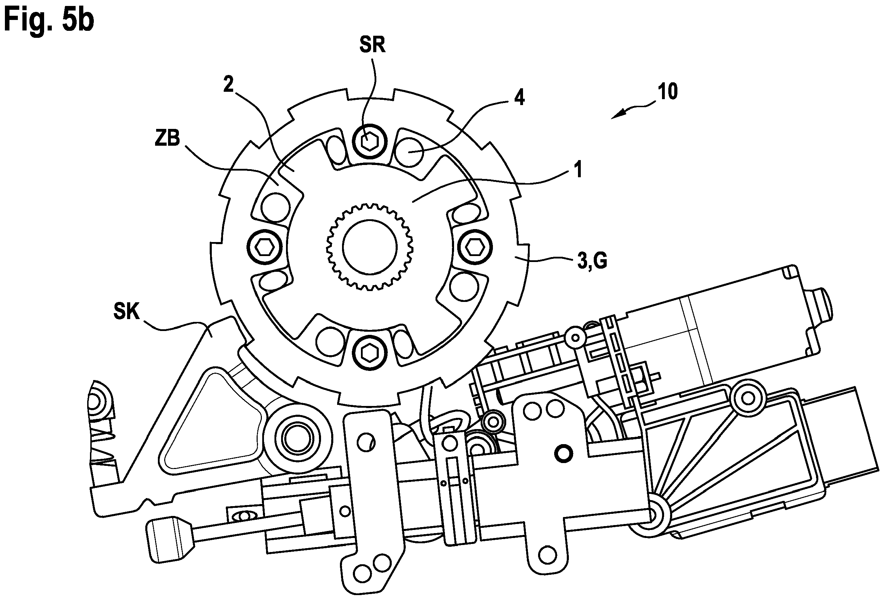

Fig. 5a und 5b zeigen eine schematische Darstellung einer Parksperreneinrichtung in einer Ruhelage und in einer Sperrlage mit einer Dämpfungseinrichtung gemäß einem weiteren Ausführungsbeispiel, welches nicht unter den Schutzumfang des unabhängigen Anspruchs 1 fällt.

Die gezeigte Parksperreneinrichtung 10 kann in einem bereits genannten Antrieb, etwa einer elektrischen Antriebsachse, verbaut sein und als Dämpfungseinrichtung 4 mehrere Gummielement 4 umfassen, etwa kugelförmig oder zylindrisch, wobei die Fig. 5a eine Ruhelage zeigt, in welcher die Gummielemente 4 in den azimuthalen Zwischenbereichen ZB angeordnet sind, und diese azimuthalen Zwischenbereich ZB eine gleich groß sein können. Die Fig. 5b zeigt dazu eine Sperrlage, wenn die Sperrklinke SK in das Klinkenrad 3 eingerastet ist. Dann kann sich das Flügelrad 2 verdrehen und die Gummielement 4 in der Drehrichtung zusammenpressen und das Drehmoment des Klinkenrades abdämpfen.

Das Gehäuse, kann das Klinkenrad 3 und Seitendeckel umfassen, welche über Schrauben SR an dem Klinkenrad 3 befestigt sein können.

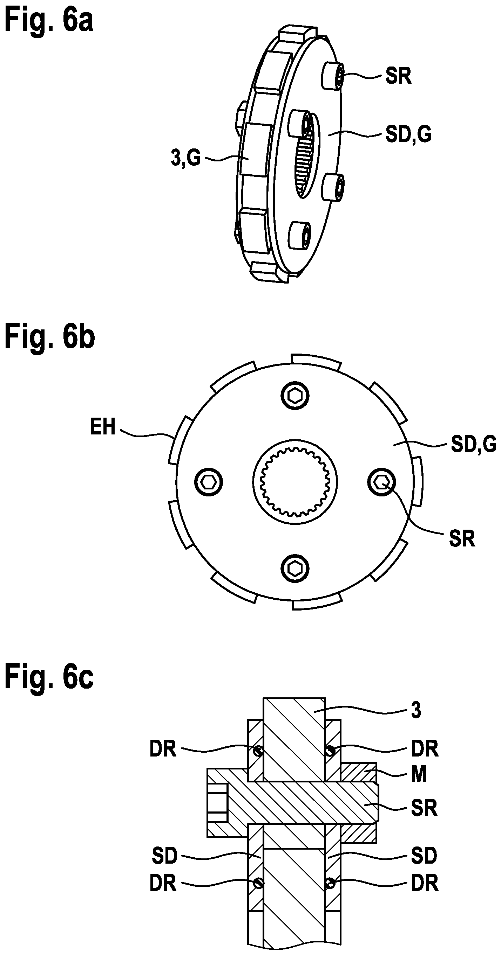

Fig. 6a, 6b und 6c zeigen eine schematische Darstellung eines Gehäuses einer Parksperreneinrichtung gemäß einem weiteren Ausführungsbeispiel der vorliegenden Erfindung.

Das Gehäuse G, kann ein Klinkenrad 3 und Seitendeckel SD umfassen, wobei die Seitendeckel SD das Klinkenrad 3 jeweils von einer lateralen Seite abdecken (Fig. 6a und Fig. 6b) und drehbar auf der Antriebswelle AW fixieren können. Die Seitendeckel SD können über Schrauben SR an dem Klinkenrad 3 befestigt sein. Hierbei heißt drehbar, dass sich das Klinkenrad 3 radial gegenüber der Antriebswelle nicht verschiebt. Das Klinkenrad 3 ist jedoch nicht drehfest mit der Antriebswelle verbunden, sondern kann eine andere Drehgeschwindigkeit annehmen als die Antriebswelle. Die Fig. 6c zeigt eine Ansicht senkrecht zur axialen Richtung und zeigt, dass die Schrauben SR das Klinkenrad 3 mit den Seitendeckel SD fest verbinden können und die Schrauben noch jeweils mit einer Mutter M gehalten werden können. Mit radial umlaufenden Dichtungsringen DR kann der Innenbereich vorteilhaft gegenüber dem Außenbereich abgedichtet werden. Die Dichtungsringe DR können sich radial innerhalb und außerhalb der Position der Schrauben SR befinden.

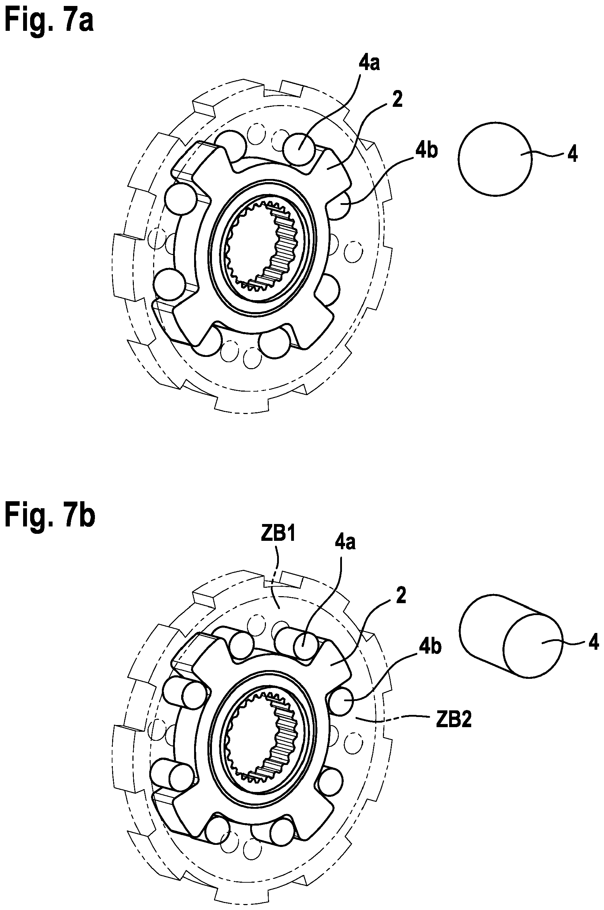

Fig. 7a - b zeigen eine schematische Darstellung einer Parksperreneinrichtung in einer Ruhelage und in einer Sperrlage mit einer Dämpfungseinrichtung gemäß einem weiteren Ausführungsbeispiel, welches nicht unter den Schutzumfang des unabhängigen Anspruchs 1 fällt.

Hierbei werden die Dämpfungseinrichtungen 4 als Gummielemente gezeigt, welche nach der Fig. 7a kugelförmig sein können und nach der Figur 7b zylinderförmig.

Eine erste Dämpfungseinrichtung 4a kann zwischen dem Flügelbereich 2 und einem ersten Anschlag in einem ersten azimuthalen Zwischenbereich ZB1 angeordnet sein und eine zweite Dämpfungseinrichtung 4b kann zwischen dem Flügelbereich 2 und einem zweiten Anschlag in einem zweiten azimuthalen Zwischenbereich ZB2 angeordnet sein, wobei der erste azimuthale Zwischenbereich ZB1 und der zweite azimuthale Zwischenbereich ZB2 an gegenüberliegenden Seiten des Flügelbereichs 2 anliegen können.

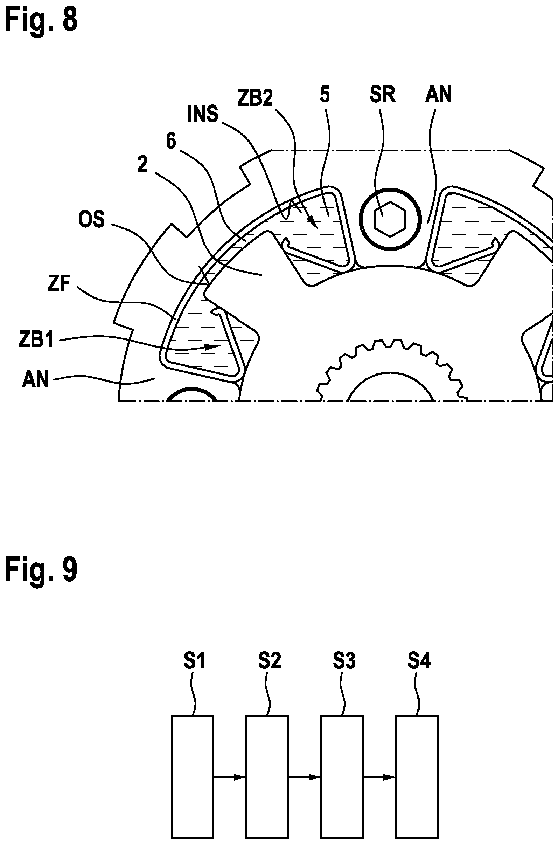

Fig. 8 zeigt eine schematische Darstellung einer Parksperreneinrichtung in einer Ruhelage mit einer Dämpfungseinrichtung gemäß einem weiteren Ausführungsbeispiel, welches nicht unter den Schutzumfang des unabhängigen Anspruchs 1 fällt.

Die Dämpfungseinrichtung 4 kann auch ein Öl 5 umfassen, welches in den azimuthalen Zwischenbereich ZB einfüllbar ist. Dabei kann zwischen der radialen Innenseite INS des Klinkenrades 3 und einer radialen Oberseiten OS des Flügelbereichs 2 ein Zwischenraum 6 vorhanden sein, durch welchen das Öl 5 von einem ersten azimuthalen Zwischenbereich ZB1 in einen benachbarten zweiten azimuthalen Zwischenbereich ZB2 drückbar ist, wobei der erste azimuthale Zwischenbereich ZB1 und der zweite azimuthale Zwischenbereich ZB2 an gegenüberliegenden Seiten des Flügelbereichs 2 anliegen. Das Öl 5 kann den Freiraum im Inneren des Gehäuses G vollständig füllen. Eine Schraube SR kann einen Seitendeckel (nicht gezeigt) an dem Klinkenrad fixieren, vorteilhaft an beiden lateralen Seiten, und das Innere des Gehäuses abdichten.

Es können weiterhin Zwischenfedern ZF in den Freiraum eingesetzt sein, zumindest eine, die sich in die an einem Flügelbereich benachbarten Zwischenbereiche ZB1 und ZB2 erstrecken kann. Durch die Zwischenfeder ZF kann der Flügelbereich 2 in Ruhelage mittig zwischen zwei benachbarten Anschlägen AN gehalten werden, sodass sich zwei gleich große mit Hydrauliköl gefüllte Zwischenbereiche ergeben können.

Fig. 9 zeigt eine Blockdarstellung von Verfahrensschritten des Verfahrens zum Herstellen einer Parksperreneinrichtung gemäß einem Ausführungsbeispiel der vorliegenden Erfindung.

Bei dem Verfahren erfolgt ein Bereitstellen S1 eines Flügelrads, welches mit einer Antriebswelle des Fahrzeugs verbindbar ist, wobei das Flügelrad einen radialen Außenumfang und zumindest einen Flügelbereich umfasst, welcher sich von dem radialen Außenumfang des Flügelrades radial nach außen erstreckt; ein Bereitstellen S2 eines Klinkenrades und von Halteelementen, wobei die Halteelemente das Klinkenrad jeweils von einer lateralen Seite drehbar auf der Antriebswelle fixieren, wobei das Klinkenrad ein Gehäuse bildet und einen Freiraum im Inneren des Gehäuses umgibt, wobei das Klinkenrad eine radiale Außenseite mit Erhebungen und Vertiefungen dazwischen umfasst und eine radiale Innenseite mit Anschlägen umfasst, wobei sich die Anschläge radial nach innen in den Freiraum erstrecken, und wobei das Flügelrad konzentrisch bezüglich der Antriebswelle in das Klinkenrad und im Freiraum eingefasst ist, derart dass sich der Flügelbereich zwischen zwei, einander azimuthal benachbarte, Anschläge in einen azimuthalen Zwischenbereich zwischen die benachbarten Anschläge erstreckt, wobei das Klinkenrad über die Halteelemente axial bezüglich dem Flügelrad fixierbar ist; und ein Anordnen S3 zumindest einer Dämpfungseinrichtung zwischen dem Flügelbereich und einem der Anschläge im azimuthalen Zwischenbereich und ein Bereitstellen S4 einer Sperrklinke, welche in eine der Vertiefungen einrastbar ist und durch welche eine Drehbewegung des Klinkenrades sperrbar ist, wobei bei einem gesperrten Klinkenrad eine Übertragung eines Drehmoments von dem Anschlag auf den Flügelbereich durch die Dämpfungseinrichtung zumindest teilweise absorbierbar ist.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar, wobei die vorliegende Erfindung durch die Ansprüche definiert wird.

## Patentansprüche

1. Parksperreneinrichtung (10) für ein Fahrzeug (F), umfassend:
- ein Flügelrad (1), welches mit einer Antriebswelle (AW) des Fahrzeugs (F) verbindbar ist, wobei das Flügelrad (1) einen radialen Außenumfang (AU) und zumindest einen Flügelbereich (2) umfasst, welcher sich von dem radialen Außenumfang (AU) des Flügelrades (1) radial nach außen erstreckt;
- ein Gehäuse (G), welches ein Klinkenrad (3) und Halteelemente (HM) umfasst, wobei die Halteelemente (HM) dazu eingerichtet sind das Klinkenrad (3) jeweils von einer lateralen Seite drehbar auf der Antriebswelle (AW) oder dem Flügelrad (1) zu fixieren, wobei das Klinkenrad (3) einen Freiraum im Inneren des Gehäuses (G) umgibt, wobei das Klinkenrad (3) eine radiale Außenseite (AS) mit Erhebungen (EH) und Vertiefungen (VT) dazwischen umfasst und eine radiale Innenseite (INS) mit Anschlägen (AN) umfasst, wobei sich die Anschläge (AN) radial nach innen in den Freiraum erstrecken, und wobei das Flügelrad (1) konzentrisch bezüglich der Antriebswelle (AW) in das Klinkenrad (3) und im Freiraum eingefasst ist, derart dass sich der Flügelbereich (2) zwischen zwei, einander azimuthal benachbarte, Anschläge (AN) in einen azimuthalen Zwischenbereich (ZB) zwischen die benachbarten Anschläge (AN) erstreckt;
- zumindest eine Dämpfungseinrichtung (4), welche zwischen dem Flügelbereich (2) und einem der Anschläge (AN) im azimuthalen Zwischenbereich (ZB) angeordnet ist, wobei die zumindest eine Dämpfungseinrichtung (4) ein Federelement (FE) umfasst; und
- eine Sperrklinke (SK), welche in eine der Vertiefungen (VT) einrastbar ist und durch welche eine Drehbewegung des Klinkenrades (3) sperrbar ist, wobei bei einem gesperrten Klinkenrad (3) eine Übertragung eines Drehmoments von dem Anschlag (AN) auf den Flügelbereich (2) durch die Dämpfungseinrichtung (4) zumindest teilweise absorbierbar ist, **dadurch gekennzeichnet,**
**dass** das Federelement (FE) eine Halterung (HE) umfasst, von welcher sich eine Feder oder zwei Federn wegerstrecken und die Halterung (HE) auf dem Anschlag (AN) aufsetzbar ist und sich die eine Feder in einen der azimuthalen Zwischenbereiche (ZB) oder jede Feder in einen anderen azimuthalen Zwischenbereich (ZB) erstreckt, und wobei die Halterung (HE) die Halteelemente (HM) umfasst.

2. Parksperreneinrichtung (10) nach Anspruch 1, bei welcher die weitere Dämpfungseinrichtung (4) ein Gummielement umfasst, welches eine Zylinderform oder eine Kugelform aufweist.

3. Parksperreneinrichtung (10) nach einem der Ansprüche 1 oder 2, bei welcher die weitere Dämpfungseinrichtung (4) ein Öl (5) umfasst, welches in den azimuthalen Zwischenbereich (ZB) einfüllbar ist.

4. Parksperreneinrichtung (10) nach Anspruch 3, bei welcher zwischen der radialen Innenseite (INS) des Klinkenrades (3) und einer radialen Oberseite (OS) des Flügelbereichs (2) ein Zwischenraum (6) vorhanden ist, durch welchen das Öl (5) von einem ersten azimuthalen Zwischenbereich (ZB1) in einen benachbarten zweiten azimuthalen Zwischenbereich (ZB2) drückbar ist, wobei der erste azimuthale Zwischenbereich (ZB1) und der zweite azimuthale Zwischenbereich (ZB2) an gegenüberliegenden Seiten des Flügelbereichs (2) anliegen.

5. Parksperreneinrichtung (10) nach Anspruch 3 oder 4, bei welcher das Öl (5) den Freiraum im Inneren des Gehäuses (G) vollständig füllt.

6. Parksperreneinrichtung (10) mit Seitendeckeln (SD) nach einem der Ansprüche 3 bis 5, bei welcher jeder Seitendeckel (SD) zwei Dichtringe (DR) umfasst, die in den Seitendeckel (SD) eingelegt sind und eine Abdichtung des Freiraums im Inneren des Gehäuses (G) zwischen dem jeweiligen Seitendeckel (SD) und dem Klinkenrad (3) darstellen.

7. Parksperreneinrichtung (10) nach einem der Ansprüche 1 bis 6, welche zumindest zwei Dämpfungseinrichtungen (4) umfasst, wobei eine erste Dämpfungseinrichtung (4a) zwischen dem Flügelbereich (2) und einem ersten Anschlag (AN1) in einem ersten azimuthalen Zwischenbereich (ZB1) angeordnet ist und eine zweite Dämpfungseinrichtung (4b) zwischen dem Flügelbereich (2) und einem zweiten Anschlag (AN2) in einem zweiten azimuthalen Zwischenbereich (ZB2) angeordnet ist, wobei der erste azimuthale Zwischenbereich (ZB1) und der zweite azimuthale Zwischenbereich (ZB2) an gegenüberliegenden Seiten des Flügelbereichs (2) anliegen.

8. Verfahren zum Herstellen einer Parksperreneinrichtung (10) für ein Fahrzeug (F), umfassend die Schritte:
- Bereitstellen (S1) eines Flügelrads (1), welches mit einer Antriebswelle (AW) des Fahrzeugs (F) verbindbar ist, wobei das Flügelrad (1) einen radialen Außenumfang (AU) und zumindest einen Flügelbereich (2) umfasst, welcher sich von dem radialen Außenumfang (AU) des Flügelrades (1) radial nach außen erstreckt;
- Bereitstellen (S2) eines Klinkenrades (3) und von Halteelementen (HM), wobei die Halteelemente (HM) das Klinkenrad (3) jeweils von einer lateralen Seite drehbar auf der Antriebswelle (AW) oder auf dem Flügelrad (1) fixieren, wobei das Klinkenrad (3) ein Gehäuse (G) bildet und einen Freiraum im Inneren des Gehäuses (G) umgibt, wobei das Klinkenrad (3) eine radiale Außenseite (AS) mit Erhebungen (EH) und Vertiefungen (VT) dazwischen umfasst und eine radiale Innenseite (INS) mit Anschlägen (AN) umfasst, wobei sich die Anschläge (AN) radial nach innen in den Freiraum erstrecken, und wobei das Flügelrad (1) konzentrisch bezüglich der Antriebswelle (AW) in das Klinkenrad (3) und im Freiraum eingefasst ist, derart dass sich der Flügelbereich (2) zwischen zwei, einander azimuthal benachbarte, Anschläge (AN) in einen azimuthalen Zwischenbereich (ZB) zwischen die benachbarten Anschläge (AN) erstreckt, wobei das Klinkenrad (3) über die Halteelemente (HM) axial bezüglich dem Flügelrad (1) fixierbar ist;
- Anordnen (S3) zumindest einer Dämpfungseinrichtung (4) zwischen dem Flügelbereich (2) und einem der Anschläge (AN) im azimuthalen Zwischenbereich (ZB); und
- Bereitstellen (S4) einer Sperrklinke (SK), welche in eine der Vertiefungen (VT) einrastbar ist und durch welche eine Drehbewegung des Klinkenrades (3) sperrbar ist, wobei bei einem gesperrten Klinkenrad (3) eine Übertragung eines Drehmoments von dem Anschlag (AN) auf den Flügelbereich (2) durch die Dämpfungseinrichtung (4) zumindest teilweise absorbierbar ist, **dadurch gekennzeichnet, dass** das Anordnen (S3) der zumindest einen Dämpfungseinrichtung (4), welche ein Federelement (FE) und eine Halterung (HE) mit Metalllaschen (MT) umfasst, derart erfolgt, dass die Metalllaschen plastisch um den Anschlag (AN) herum verpresst werden, sodass das Federelement am Klinkenrad befestigt wird, derart dass sich eine Feder oder zwei Federn vom Anschlag (AN) wegerstrecken und sich die eine Feder in einen der azimuthalen Zwischenbereiche (ZB) oder jede Feder in jeweils einen anderen azimuthalen Zwischenbereich (ZB) erstreckt, und wobei nach einem Einsetzen des Flügelrades (1) in einen Freiraum das Klinkenrades (3) die Halteelemente (HM) jeweils von einer axialen Seite um das Flügelrad (1) gebogen werden, derart dass die Halteelemente (HM) das Flügelrad (1) axial fixieren.

## Claims

1. Parking lock device (10) for a vehicle (F), comprising:
- an impeller (1), which is connectable to a drive shaft (AW) of the vehicle (F), wherein the impeller (1) comprises a radial outer circumference (AU) and at least one vane region (2) which extends radially outwards from the radial outer circumference (AU) of the impeller (1);
- a housing (G), which comprises a ratchet wheel (3) and holding elements (HM), wherein the holding elements (HM) are designed to fix the ratchet wheel (3) rotatably on the drive shaft (AW) or on the impeller (1), in each case from a lateral side, wherein the ratchet wheel (3) surrounds a free space in the interior of the housing (G), wherein the ratchet wheel (3) comprises a radial outer side (AS) with elevations (EH) and depressions (VT) therebetween and comprises a radial inner side (INS) with stops (AN), wherein the stops (AN) extend radially inwards into the free space, and wherein the impeller (1) is framed concentrically with respect to the drive shaft (AW) in the ratchet wheel (3) and in the free space, in such a way that the vane region (2) between two azimuthally adjacent stops (AN) extends into an azimuthal intermediate region (ZB) between the adjacent stops (AN);
- at least one damping device (4), which is arranged between the vane region (2) and one of the stops (AN) in the azimuthal intermediate region (ZB), wherein the at least one damping device (4) comprises a spring element (FE); and
- a pawl (SK), which can be latched into one of the depressions (VT) and by which a rotational movement of the ratchet wheel (3) can be blocked, wherein, with a blocked ratchet wheel (3), transmission of a torque from the stop (AN) to the vane region (2) can be at least partially absorbed by the damping device (4), **characterized in that**
the spring element (FE) comprises a holder (HE) from which a spring or two springs extend, and the holder (HE) can be placed on the stop (AN), and the one spring extends into one of the azimuthal intermediate regions (ZB) or each spring extends into a different azimuthal intermediate region (ZB), and wherein the holder (HE) comprises the holding elements (HM).

2. Parking lock device (10) according to Claim 1, in which the further damping device (4) comprises a rubber element, which has a cylindrical shape or a spherical shape.

3. Parking lock device (10) according to either of Claims 1 and 2, in which the further damping device (4) comprises an oil (5) which can be filled into the azimuthal intermediate region (ZB).

4. Parking lock device (10) according to Claim 3, in which an intermediate space (6) is present between the radial inner side (INS) of the ratchet wheel (3) and a radial top side (OS) of the vane region (2), through which intermediate space (6) the oil (5) can be pushed from a first azimuthal intermediate region (ZB1) into an adjacent second azimuthal intermediate region (ZB2), wherein the first azimuthal intermediate region (ZB1) and the second azimuthal intermediate region (ZB2) bear on opposite sides of the vane region (2).

5. Parking lock device (10) according to Claim 3 or 4, in which the oil (5) completely fills the free space in the interior of the housing (G).

6. Parking lock device (10) with side covers (SD) according to any one of Claims 3 to 5, in which each side cover (SD) comprises two sealing rings (DR) which are inserted into the side cover (SD) and which seal the free space in the interior of the housing (G) between the respective side cover (SD) and the ratchet wheel (3).

7. Parking lock device (10) according to one of Claims 1 to 6, which comprises at least two damping devices (4), wherein a first damping device (4a) between the vane region (2) and a first stop (AN1) is arranged in a first azimuthal intermediate region (ZB1), and a second damping device (4b) between the vane region (2) and a second stop (AN2) is arranged in a second azimuthal intermediate region (ZB2), wherein the first azimuthal intermediate region (ZB1) and the second azimuthal intermediate region (ZB2) bear on opposite sides of the vane region (2).

8. Method for producing a parking lock device (10) for a vehicle (F), comprising the steps:
- provision (Sl) of an impeller (1), which is connectable to a drive shaft (AW) of the vehicle (F), wherein the impeller (1) comprises a radial outer circumference (AU) and at least one vane region (2) which extends radially outwards from the radial outer circumference (AU) of the impeller (1);
- provision (S2) of a ratchet wheel (3) and of holding elements (HM), wherein the holding elements (HM) fix the ratchet wheel (3) rotatably on the drive shaft (AW) or on the impeller (1), in each case from a lateral side, wherein the ratchet wheel (3) forms a housing (G) and surrounds a free space in the interior of the housing (G), wherein the ratchet wheel (3) comprises a radial outer side (AS) with elevations (EH) and depressions (VT) therebetween and comprises a radial inner side (INS) with stops (AN), wherein the stops (AN) extend radially inwards into the free space, and wherein the impeller (1) is framed concentrically with respect to the drive shaft (AW) in the ratchet wheel (3) and in the free space, in such a way that the vane region (2) between two azimuthally adjacent stops (AN) extends into an azimuthal intermediate region (ZB) between the adjacent stops (AN), wherein the ratchet wheel (3) is axially fixable with respect to the impeller (1) via the holding elements (HM) ;
- arrangement (S3) of at least one damping device (4) between the vane region (2) and one of the stops (AN) in the azimuthal intermediate region (ZB); and
- provision (S4) of a pawl (SK), which can be latched into one of the depressions (VT) and by which a rotational movement of the ratchet wheel (3) can be blocked, wherein, with a blocked ratchet wheel (3), transmission of a torque from the stop (AN) to the vane region (2) can be at least partially absorbed by the damping device (4), **characterized in that** the arrangement (S3) of the at least one damping device (4), which comprises a spring element (FE) and a holder (HE) with metal tabs (MT), is effected in such a way that the metal tabs are pressed plastically around the stop (AN), so that the spring element is attached to the ratchet wheel in such a way that a spring or two springs extend away from the stop (AN) and the one spring extends into one of the azimuthal intermediate regions (ZB) or each spring extends into a different azimuthal intermediate region (ZB), and wherein, after the impeller (1) has been inserted into a free space of the ratchet wheel (3), the holding elements (HM) are each bent around the impeller (1) from an axial side, in such a way that the holding elements (HM) axially fix the impeller (1).

## Revendications

1. Dispositif de verrouillage de stationnement (10) pour un véhicule (F), comprenant :
une roue à ailettes (1) apte à être reliée à un arbre d'entraînement (AW) du véhicule (F), la roue à ailettes (1) comprenant une circonférence radialement extérieure (AU) et au moins une zone d'ailette (2) qui s'étend radialement vers l'extérieur à partir de la périphérie radialement extérieure (AU) de la roue à ailettes (1) ;
- un boîtier (G) comprenant une roue à rochet (3) et des éléments de retenue (HM), dans lequel les éléments de retenue (HM) sont adaptés pour fixer de manière rotative la roue à rochet (3) sur l'arbre d'entraînement (AW) ou la roue à ailettes (1) à partir d'un côté latéral respectif, la roue à rochet (3) entourant un espace libre à l'intérieur du boîtier (G), la roue à rochet (3) comprenant une face radialement extérieure (AS) avec des bosses (EH) et des creux (VT) entre celles-ci et comprenant une face radialement intérieure (INS) avec des butées (AN), les butées (AN) s'étendant radialement vers l'intérieur dans l'espace libre, et la roue à ailettes (1) étant enchâssée concentriquement à l'arbre d'entraînement (AW) dans la roue à rochet (3) et dans l'espace libre, de sorte que la zone d'ailette (2) s'étende entre deux butées (AN) voisines en azimut dans une zone intermédiaire (ZB) en azimut entre les butées (AN) voisines ;
- au moins un dispositif d'amortissement (4), qui est agencé entre la zone d'ailette (2) et l'une des butées (AN) dans la zone intermédiaire azimutale (ZB), ledit au moins un dispositif d'amortissement (4) comprenant un élément formant ressort (FE) ; et
- un cliquet d'arrêt (SK) qui est apte à être enclenché dans l'un des creux (VT) et par lequel un mouvement de rotation de la roue à rochet (3) est apte à être bloqué, une transmission d'un couple de rotation de la butée (AN) à la zone d'ailette (2) étant apte à être absorbée au moins partiellement par le dispositif d'amortissement (4) lorsque la roue à rochet (3) est bloquée, **caractérisé**
**en ce que** l'élément formant ressort (FE) comprend un support (HE) duquel s'étend un ressort ou deux ressorts et le support (HE) est apte à être posé sur la butée (AN) et l'un des ressorts s'étend dans l'une des zones intermédiaires azimutales (ZB), ou chaque ressort s'étend dans une autre zone intermédiaire azimutale (ZB), et le support (HE) comprenant les éléments de retenue (HM).

2. Dispositif de verrouillage de stationnement (10) selon la revendication 1, dans lequel ledit autre dispositif d'amortissement (4) comprend un élément en caoutchouc qui présente une forme cylindrique ou une forme sphérique.

3. Dispositif de verrouillage de stationnement (10) selon l'une des revendications 1 ou 2, dans lequel ledit autre dispositif d'amortissement (4) comprend une huile (5) qui est apte à être placée dans la zone intermédiaire azimutale (ZB) de façon à remplir cette zone.

4. Dispositif de verrouillage de stationnement (10) selon la revendication 3, dans lequel il existe un espace intermédiaire (6) entre la face intérieure radiale (INS) de la roue à rochet (3) et une face supérieure radiale (OS) de la zone d'ailette (2), à travers lequel l'huile (5) est apte à être pressée depuis une première zone intermédiaire azimutale (ZB1) dans une deuxième zone intermédiaire azimutale (ZB2) adjacente, la première zone intermédiaire azimutale (ZB1) et la deuxième zone intermédiaire azimutale (ZB2) étant en contact avec des côtés opposés de la zone d'ailette (2).

5. Dispositif de verrouillage de stationnement (10) selon la revendication 3 ou 4, dans lequel l'huile (5) remplit complètement l'espace libre à l'intérieur du boîtier (G).

6. Dispositif de verrouillage de stationnement (10) avec des couvercles latéraux (SD) selon l'une des revendications 3 à 5, dans lequel chaque couvercle latéral (SD) comprend deux bagues d'étanchéité (DR) qui sont insérées dans le couvercle latéral (SD) et réalisent une étanchéité de l'espace libre à l'intérieur du boîtier (G) entre le couvercle latéral (SD) respectif et la roue à rochet (3).

7. Dispositif de verrouillage de stationnement (10) selon l'une des revendications 1 à 6, qui comprend au moins deux dispositifs d'amortissement (4), un premier dispositif d'amortissement (4a) étant agencé entre la zone d'ailette (2) et une première butée (AN1) dans une première zone intermédiaire azimutale (ZB1) et un deuxième dispositif d'amortissement (4b) étant agencé entre la zone d'ailette (2) et une deuxième butée (AN2) dans une deuxième zone intermédiaire azimutale (ZB2), la première zone intermédiaire azimutale (ZB1) et la deuxième zone intermédiaire azimutale (ZB2) se trouvant sur des côtés opposés de la zone d'ailette (2).

8. Procédé de fabrication d'un dispositif de verrouillage de stationnement (10) pour un véhicule (F), comprenant les étapes suivantes :
- prévoir (S1) une roue à ailettes (1) apte à être reliée à un arbre d'entraînement (AW) du véhicule (F), la roue à ailettes (1) comprenant une circonférence radialement extérieure (AU) et au moins une zone d'ailette (2) s'étendant radialement vers l'extérieur à partir de la circonférence radialement extérieure (AU) de la roue à ailettes (1) ;
- prévoir (S2) une roue à rochet (3) et des éléments de retenue (HM), lesdits éléments de retenue (HM) fixant chacun la roue à rochet (3) d'un côté latéral de manière rotative sur l'arbre d'entraînement (AW) ou sur la roue à ailettes (1), la roue à rochet (3) formant un boîtier (G) et entourant un espace libre à l'intérieur du boîtier (G), la roue à rochet (3) comprenant une face radialement extérieure (AS) avec des bosses (EH) et des creux (VT) entre celles-ci et comprenant une face radialement intérieure (INS) avec des butées (AN), les butées (AN) s'étendant radialement vers l'intérieur dans l'espace libre, et la roue à ailettes (1) étant enchâssée concentriquement à l'arbre d'entraînement (AW) dans la roue à rochet (3) et dans l'espace libre, de sorte que la zone d'ailette (2) s'étende entre deux butées (AN) voisines en azimut dans une zone intermédiaire (ZB) en azimut entre les butées (AN) voisines, la roue à rochet (3) étant apte à être fixée axialement par rapport à la roue à ailettes (1) par l'intermédiaire des éléments de retenue (HM) ;
- disposer (S3) au moins un dispositif d'amortissement (4) entre la zone d'ailette (2) et l'une des butées (AN) dans la zone intermédiaire azimutale (ZB) ; et
- prévoir (S4) un cliquet d'arrêt (SK) qui est apte à être enclenché dans l'un des creux (VT) et par lequel un mouvement de rotation de la roue à rochet (3) est apte à être bloqué, une transmission d'un couple de rotation de la butée (AN) à la zone d'ailette (2) étant apte à être absorbée au moins partiellement par le dispositif d'amortissement (4) lorsque la roue à rochet (3) est bloquée, **caractérisé en ce que** l'agencement (S3) dudit au moins un dispositif d'amortissement (4), qui comprend un élément formant ressort (FE) et un support (HE) avec des pattes métalliques (MT), s'effectue de telle manière que les pattes métalliques sont comprimées plastiquement autour de la butée (AN), de sorte que l'élément formant ressort soit fixé à la roue à rochet, de sorte qu'un ressort ou deux ressorts s'étendent à partir de la butée (AN) et que l'un des ressorts s'étende dans l'une des zones intermédiaires azimutales (ZB) ou que chaque ressort s'étende dans une autre zone intermédiaire azimutale (ZB), et dans lequel, après une mise en place de la roue à ailettes (1) dans un espace libre de la roue à rochet (3), les éléments de retenue (HM) sont respectivement repliés d'un côté axial autour de la roue à ailettes (1), de telle sorte que les éléments de retenue (HM) fixent axialement la roue à ailettes (1).
